Europäisches Patentamt

European Patent Office

Office européen des brevets

(11) Veröffentlichungsnummer: **0 305 851**
A2

## (12) EUROPÄISCHE PATENTANMELDUNG

(21) Anmeldenummer: **88113658.4**

(51) Int. Cl.⁴: **C09J 3/14** , //C08L51:00

(22) Anmeldetag: **23.08.88**

(30) Priorität: **29.08.87 DE 3728991**

(43) Veröffentlichungstag der Anmeldung:
**08.03.89 Patentblatt 89/10**

(84) Benannte Vertragsstaaten:
**BE DE ES FR GB IT NL**

(71) Anmelder: **BASF Aktiengesellschaft**
**Carl-Bosch-Strasse 38**
**D-6700 Ludwigshafen(DE)**

(72) Erfinder: **Rehmer, Gerd, Dr.**
**Koenigsberger Strasse 1**
**D-6712 Bobenheim-Roxheim(DE)**
Erfinder: **Druschke, Wolfgang, Dr.**
**Berliner Strasse 28**
**D-6716 Dirmstein(DE)**
Erfinder: **Aydin, Oral, Dr.**
**Sophienstrasse 14**
**D-6800 Mannheim 1(DE)**

(54) Heisssiegel-, Dichtungs- und Schmelzklebemassen.

(57) Die Erfindung betrifft Heißsiegel-, Dichtungs- und Schmelzklebemassen, insbesondere Schmelzhaftklebemassen, hergestellt durch Lösungs- oder Substanzpfropfcopolymerisation von

A 5 bis 30 Gew.%, bezogen auf die Massen, an einem olefinisch ungesättigten Polymerisat eines Molekulargewichts (Zahlenmittel) von 500 bis 50.000 und einer Hydrieriodzahl (nach DIN 53 241) von 0,5 bis 51 aus überwiegenden Mengen monovinylaromatischen Verbindungen mit

B 95 bis 70 Gew.%, bezogen auf die Massen, eines Gemisches aus

(d) 100 bis 50 % seines Gewichts an (Meth)acrylsäureestern, 1 bis 12 C-Atomen enthaltender Alkanole,

(e) 0 bis 50 % seines Gewichts an Vinylestern, 2 bis 18 C-Atome enthaltender Alkanolmonocarbonsäuren,

(f) 0 bis 10 % seines Gewichts an Mono-(meth)acrylsäureestern, 2 bis 8 C-Atomen enthaltender Alkandiole oder des Glycerins,

(g) 0 bis 15 % seines Gewichts an 3 bis 5 C-Atome enthaltenden monoolefinisch ungesättigten Mono- und/oder Dicarbonsäuren und

(h) 0 bis 10 % seines Gewichts an monoolefinisch ungesättigten, ein tertiäres Stickstoffatom enthaltenden Monomeren,

bei Temperaturen von 80 bis 200 °C und gegebenenfalls Abdampfen der Lösungsmittel hergestellt sind.

EP 0 305 851 A2

EP 0 305 851 A2

## Heißsiegel-, Dichtungs- und Schmelzklebemassen

Die vorliegende Erfindung betrifft Heißsiegel-, Dichtungs- und Schmelzklebemassen, insbesondere Schmelzhaftkleber.

In der Klebstoffindustrie werden in zunehmendem Maße an Stelle der bisher üblichen Klebstofflösungen oder -dispersionen für Heißsiegel-, Dichtungs- und Klebezwecke thermoplastische Massen eingesetzt, die wegen des Fehlens organischer Lösungsmittel toxikologische und ökologische Vorteile bieten. Da derartige Massen in geschmolzener Form auf die Substrate aufgebracht werden, müssen nach dem Auftragen keine Lösungsmittel und auch kein Wasser abgetrennt werden, wodurch Zeit und Energie eingespart werden kann.

Thermoplastische Harze, die für Heißsiegel-, Dichtungs- oder Schmelzklebemassen eingesetzt werden sollen, müssen in geschmolzenem Zustand eine ausreichend niedrige Viskosität aufweisen und weitgehend viskositätsstabil sein, um eine einwandfreie Bearbeitbarkeit über längere Zeit zu gewährleisten. Sie müssen außerdem, insbesondere, wenn es sich um Schmelzklebemassen handelt, gute Klebekraft und Scherfestigkeit aufweisen.

Es ist bekannt, als Schmelzkleber Copolymerisate von Styrol und Acryl- oder Methacrylsäureestern sowie gegebenenfalls polaren, hydrophilen, olefinisch ungesättigten Monomeren einzusetzen. Diese Produkte weisen gute Wärmebeständigkeit bei 280 bis 300°C auf, müssen aber sehr hohe Molekulargewichte haben, um einen möglichst geringen kalten Fluß und gute Wärmestandfestigkeit der Verklebung zu zeigen. Aufgrund der erforderlichen hohen Molekulargewichte sind die Schmelzen aber sehr hochviskos und schwer verarbeitbar. Wird bei diesen Produkten jedoch das Molekulargewicht gesenkt, um die Bearbeitbarkeit zu verbessern, so gehen Scherfestigkeit und Wärmestandfestigkeit sehr stark zurück.

Aus der CA-PS 1 059 695 sind Schmelzhaftkleber bekannt, bei denen es sich um Copolymerisate aus Acrylestern und polare Gruppen tragenden Comonomeren, wie Acrylsäure, sowie gegebenenfalls zusätzlich Aminen und/oder Nitrilen handelt. Diese Schmelzhaftkleber haben gute Klebkraft und Scherfestigkeit, weisen aber nur geringe Wärmestandfestigkeit auf.

Auch bei den aus der DE-B 20 58 665 bekannten Schmelzklebern handelt es sich um Copolymerisate auf Acrylesterbasis, die als polare Comonomere Acrylnitril und Acrylamid einpolymerisiert enthalten. Diese Produkte haben gute Klebekraft, Scherfestigkeit und Wärmestandfestigkeit, doch ist ihre Viskosität in geschmolzenem Zustand sehr hoch, wodurch ihre Verarbeitung stark erschwert wird.

Schmelzhaftkleber mit guter Wärmestandfestigkeit, die aus Acrylestern durch Copolymerisation mit Acryl- und Methacrylamid hergestellt sind, sind in der EP-PS 00 26 907 beschrieben. Diese weisen zwar eine niedrige Schmelzviskosität auf, ihre Scherfestigkeit und Klebrigkeit sind jedoch ungenügend.

Die aus der US-PS 3 558 746 bekannten Schmelzkleber, die durch Pfropfung von (Meth)-acrylsäureestern im Gemisch mit aromatischen olefinisch ungesättigten Monomeren auf Polymere aus o.a. Styrol und (Meth)acrylsäureestern und gegebenenfalls unter Mitverwendung weiterer olefinisch ungesättigter Monomerer erhalten sind, zeichnen sich zwar durch niedrige Viskosität ihrer Schmelze aus, genügen jedoch hinsichtlich ihrer Wärmestandfestigkeit nicht.

Schließlich sind aus der GB-PS 1 557 289 thermoplastische Massen bekannt, die als druckempfindliche Klebstoffe und als Laminierungsklebstoffe verwendet werden können. Diese Massen sollen gegenüber einer Oxidation unter Einwirkung von UV-Licht unempfindlich sein. Bei den Massen handelt es sich um Gemische von Mischpolymerisaten, die trotz einer Verträglichkeit der Polymeren über längere Zeiträume hin zur Entmischung neigen, so daß die Zeitstandfestigkeit der Verklebungen nicht gewährleistet ist.

Der vorliegenden Erfindung liegt die Aufgabe zugrunde, einen Weg zu Heißsiegel-, Dichtungs- und Schmelzklebemassen, insbesondere zu Schmelzhaftklebern, zu zeigen, die nicht die Nachteile der bekannten Massen besitzen.

Es wurde nun gefunden, daß Heißsiegel-, Dichtungs- und Schmelzklebemassen, die hergestellt sind durch Lösungs- oder Substanz-Pfropfcopolymerisation von

A 5 bis 30 Gew.%, bezogen auf die Massen, an einem olefinisch ungesättigten Polymerisat eines Molekulargewichts (Zahlenmittel) von 500 bis 50.000 und einer Hydrieriodzahl (nach DIN 53 241) von 0,5 bis 51 aus
(a) 40 bis 100 % seines Gewichts monovinylaromatischen Verbindungen,
(b) 0 bis 51 % seines Gewichts 3 bis 5 C-Atome enthaltenden Mono- oder Carbonsäuren und
(c) 0 bis 20 % seines Gewichts anderen monoolefinisch ungesättigten Monomeren,
mit der Maßgabe, daß die Summe der Gewichtsprozent (a) bis (c) immer 100 beträgt, mit

2

B 95 bis 70 Gew.%, bezogen auf die Massen, eines Gemisches aus

(d) 100 bis 50 % seines Gewichts an (Meth)acrylsäureestern, 1 bis 12 C-Atomen enthaltender Alkanole,

(e) 0 bis 50 % seines Gewichts an Vinylestern, 2 bis 18 C-Atome enthaltender Alkanmonocarbonsäuren,

(f) 0 bis 10 % seines Gewichts an Mono-(meth)acrylsäureestern, 2 bis 8 C-Atomen enthaltender Alkandiole oder des Glycerins,

(g) 0 bis 15 % seines Gewichts an 3 bis 5 C-Atome enthaltenden monoolefinisch ungesättigten Mono- und/oder Dicarbonsäuren und

(h) 0 bis 10 % seines Gewichts an monoolefinisch ungesättigten, ein tertiäres Stickstoffatom enthaltenden Monomeren, bei Temperaturen von 80 bis 200° C und gegebenenfalls Abdampfen der Lösungsmittel, besonders ausgewogene Eigenschaften hinsichtlich Viskosität der Schmelze (Verarbeitbarkeit), Klebrigkeit, Haftfestigkeit sowie Scherfestigkeit und Schälfestigkeit aufweisen.

Als Komponente A für die Copolymerisation dienen olefinisch ungesättigte Polymerisate aus

a) 40 bis 100 Gew.% monovinylaromatischen Monomeren,

b) 0 bis 60 Gew.% monoethylenisch ungesättigten Carbonsäuren mit 3 bis 6 C-Atomen, Maleinsäureanhydrid und/oder Itaconsäureanhydrid und/oder deren Anhydride,

c) 0 bis 20 Gew.% anderen monoolefinisch ungesättigten Monomeren, mit der Maßgabe, daß die Summe der Gewichtsprozente a) bis c) immer 100 beträgt, mit den oben angegebenen Monomeren. Bei den Polymerisaten A) kann es sich entweder um Homopolymerisate von monovinylaromatischen Monomeren, wie Styrol, handeln oder um Copolymerisate der monovinylaromatischen Monomeren mit einer olefinisch ungesättigten Carbonsäure oder einem Anhydrid einer monoolefinisch ungesättigten Carbonsäure.

Als Komponente a) der Polymerisate (A) kommen monovinylaromatische Monomere in Betracht, z.B. Styrol, α-Methylstyrol, α-Alkylstyrole mit 2 bis 6 C-Atomen im Alkylrest, der geradkettig und/oder verzweigt sein kann, z.B. α-Iso-Butylstyrol. Daneben eignen sich Vinylaromaten, die außer der Vinylgruppierung am aromatischen Kern eine $C_1$- bis $C_8$-Alkylgruppe tragen, z.B. Vinyltoluol, tert.-Butylstyrol, Halogenstyrole, Kern(alkyl)substituierte α-Alkylstyrole mit 1 bis 8 C-Atomen im Kernalkylrest und mit 1 bis 6 C-Atomen im α-Alkylrest, z.B. para-tert.-Butyl-α-methylstyrol. Vorzugsweise verwendet man aus dieser Monomerengruppe Styrol. Es ist zu 40 bis 100 Gew.%, vorzugsweise 60 bis 95 Gew.% am Aufbau des Polymerisates A) beteiligt.

Zu den Monomeren der Gruppe b) gehören monoolefinisch ungesättigte Carbonsäuren mit 3 bis 6 C-Atomen und/oder deren Anhydride, z.B. Acrylsäure, Methacrylsäure, Ethacrylsäure, Maleinsäure, Fumarsäure, Itaconsäure, Maleinsäureanhydrid, Itaconsäureanhydrid, Vinylmilchsäure, Vinylphosphonsäure und Vinylsulfonsäure. Diese Monomeren werden entweder allein oder in Mischung eingesetzt. Vorzugsweise verwendet man aus dieser Gruppe von Monomeren Acrylsäure, Methacrylsäure, Maleinsäureanhydrid und Itaconsäureanhydrid. Die Monomeren dieser Gruppe sind zu 0 bis 51, vorzugsweise 5 bis 40 Gew.%, insbesondere 15 bis 30 Gew.%, am Aufbau der Polymerisate A) beteiligt.

Außer den Monomeren der Gruppen a) und b) können noch gegebenenfalls bis zu 20 Gew.% andere monoolefinisch ungesättigte Monomere in den Polymerisate A) einpolymerisiert enthalten sein. Zu dieser Gruppe von Monomeren gehören beispielsweise die Ester der Acrylsäure, Methacrylsäure und/oder Ethacrylsäure, die sich von Alkanolen mit 1 bis 12 C-Atomen ableiten, z.B. Methylacrylat, Methylmethacrylat, tert.-Butylcyclohexylacrylat, tert.-Butylcyclohexylmethacrylat, Cyclohexylacrylat, Cyclohexylmethacrylat, tert.-Butylacrylat, tert.-Butylmethacrylat, n-Butylacrylat, n-Butylmethacrylat, Isobutylacrylat, Isobutylmethacrylat, 2-Ethylhexylacrylat, 2-Ethylhexylmethacrylat sowie Vinylester von gesättigten aliphatischen Carbonsäuren, die 2 bis 10 C-Atome enthalten, z.B. Vinylacetat, Vinylpropionat, Vinyllaurat, Vinylbutyrat und Vinylstearat. Eine andere Gruppe von Monomeren sind die Amide von Methacrylsäure, Acrylsäure und Ethacrylsäure. Hierbei kann es sich beispielsweise um Methacrylamid oder Acrylamid sowie um N-substituierte Amide, wie Methacrylsäure-N-tert.butylamid oder Acrylsäure-N-tert.-butylamid handeln. Eine weitere Klasse von Monomeren, die gegebenenfalls am Aufbau des Polymerisats A) beteiligt sind, sind Acrylnitril und Methacrylnitril. Die Monomeren der Gruppe der c) können entweder allein oder in Mischung in Mengen bis zu 20 Gew.% im Copolymerisat A) einpolymerisiert sein. Die Summe der Angaben in Prozent a), b) und c) beträgt jeweils 100.

Die Polymerisate (A) haben ein Molekulargewicht (Zahlenmittel) von 500 bis 50 000 und Hydrierjodzahlen (nach DIN 53 241) von 0,5 bis 51, vorzugsweise 1,3 bis 25. Es ist besonders bevorzugt, Polymerisate A) zu verwenden, deren Hydrierjodzahlen 2,5 bis 12,7 betragen. Das mittlere Molekulargewicht (Zahlenmittel) der Polymerisate A) beträgt vorzugsweise 1000 bis 25 000. Vorzugsweise werden solche Polymerisate A) eingesetzt, die in aliphatischen Kohlenwasserstoffen eines Siedebereichs von 50 bis 150° C schwer löslich sind. Die Polymerisate (A) haben im allgemeinen Erweichungstemperaturen (gemessen nach DIN 53 180 und/oder DIN/ISO 4625) von 80 bis 200° C, vorzugsweise von 80 bis 180° C, wobei für Heißsiegelmassen

3

EP 0 305 851 A2

Copolymerisate (A) mit Erweichungstemperaturen von 80 bis 120°C, für Dichtungsmassen Copolymerisate (A) mit Erweichungstemperaturen von 80 bis 100°C, für Schmelzkleber von 80 bis 160°C und dabei für Schmelzhaftkleber von 80 bis 180°C besonders vorgezogen werden.

Solche Polymerisate sind bekannt. Sie werden beispielsweise durch Homo- oder Copolymerisation der Monomeren a) bis c) in Substanz bei 180°C bis 400°C, vorzugsweise 200 bis 300°C hergestellt. Besonders bevorzugt ist die kontinuierliche Substanzpolymerisation der Monomeren, die in dem angegebenen Temperaturbereich und insbesondere bei 200 bis 260°C und Drücken von 1 bis 100, vorzugsweise 20 bis 50 bar in Abwesenheit von Polymerisationsinitiatoren oder auch in Gegenwart von Polymerisationsinitiatoren und Polymerisationsinhibitoren durchgeführt wird. Solche Polymerisationsverfahren sind beispielsweise aus den DE-OSen 3 026 831 und 3 046 476, der US-PS 4 042 768 und der WO-Anmeldung 82/2387 bekannt.

Als Monomere der Gruppe B, die mit den olefinisch ungesättigten Polymerisaten (A) pfropf(co)-polymerisiert werden, werden in erster Linie Acrylsäureester und/oder Methacrylsäureester von 1 bis 12 C-Atome enthaltenden Alkanolen eingesetzt, z.B. Methylacrylat und -methacrylat, Ethylacrylat und -methacrylat, n-Butylacrylat, Isobutylacrylat und -methacrylat, 2-Ethylhexylacrylat und -methacrylat sowie ferner Laurylacrylat und -methacrylat. Ihre Menge beträgt vorzugsweise 99,8 bis 80 % des Gewichts der Monomerenmischung B, wobei Acryl- und Methacrylester 1 bis 8 C-Atome enthaltenden Alkanole vorgezogen werden. Für die Herstellung von Heißsiegel massen werden vorzugsweise 85 bis 97,5 % des Monomerengemisches B an (Meth)acrylsäureestern von 4 bis 12 C-Atome enthaltenden Alkanolen eingesetzt, für die Herstellung von Dichtungsmassen 85 bis 95 Gew.% des Monomerengemisches B an (Meth)-acrylsäureestern von 4 bis 10 C-Atome enthaltenden Alkanolen, für Schmelzkleber 85 bis 97,5 % des Monomerengemisches B an (Meth)acrylsäureestern 4 bis 12 C-Atome enthaltenden Alkanole und der Schmelzhaftkleber 90 bis 100 Gew.% des Monomerengemisches B an (Meth)acrylsäureestern von 4 bis 18 C-Atome enthaltenden Alkanolen, insbesondere 2-Ethylhexylacrylat und -methacrylat eingesetzt.

Zusätzlich können als Monomere B 0 bis 50 Gew.%, vorzugsweise 2,5 bis 30 Gew.% des Monomerengemisches B an Vinylestern 2 bis 18 C-Atome enthaltender Alkanmonocarbonsäuren eingesetzt werden, insbesondere von 2 bis 12 C-Atomen enthaltenden Alkanmonocarbonsäuren wie Vinylacetat, Vinylpropionat, Vinyl-n-butyrat, Vinyllaurat und ferner Vinylstearat. Von besonderem Interesse ist Vinylacetat und Vinylpropionat, von denen bei der Herstellung von Heißsiegelmassen vorzugsweise 1 bis 15 Gew.% des Monomerengemischs B, bei der Herstellung von Dichtungsmassen 1 bis 15 Gew.% des Monomerengemisches B, bei der Herstellung von Schmelzklebern 1 bis 5 Gew.% des Monomerengemisches B und bei der Herstellung von Schmelzhaftklebern von 0 bis 7,5 Gew.% des Monomerengemisches B verwendet werden. Als Monomere (f) können mit den Monomeren B 0 bis 10, vorzugsweise 1 bis 5 Gew.% des Monomerengemischs B an Mono-(meth)acrylsäureestern 2 bis 8 C-Atome enthaltender Alkandiole oder des Glycerins, wie β-Hydroxyethylacrylat und -methacrylat, 2-Hydroxypropylacrylat und -methacrylat, 4-Hydroxybutylacrylat und -methacrylat, 6-Hydroxyhexylacrylat und -methacrylat sowie 8-Hydroxyoctylacrylat und Glycerinmonoacrylat und -methacrylat eingesetzt werden, die bei der Herstellung von Heißsiegelmassen in Mengen von 1 bis 2,5 Gew.% des Monomerengemischs B bei der Herstellung von Dichtungsmassen in Mengen von 0 bis 5 Gew.% des Monomerengemischs B, bei der Herstellung von Schmelzklebern 0,1 bis 5 Gew.% des Monomerengemischs B und bei der Herstellung von Schmelzhaftklebern 0,1 bis 5 Gew.% des Monomerengemischs B verwendet werden. Als weitere Monomere (g) können bei der Herstellung der erfindungsgemäßen Heißsiegel-, Dichtungs- und Schmelzklebemassen 0 bis 15, vorzugsweise 0,01 bis 7,5 Gew.%, bezogen auf das Monomerengemisch B 3 bis 6 C-Atome enthaltende monoolefinisch ungesättigte Mono- und/oder Dicarbonsäuren wie besonders Acrylsäure, Methacrylsäure, Itakonsäure, Fumarsäure sowie ferner Maleinsäure und Maleinsäuremonoalkylester, wie Maleinsäuremonomethylester und -mono-n-butylester eingesetzt werden. Von besonderem Interesse sind derartige Monomere (g) bei der Herstellung von Schmelzklebemassen und Haftklebemassen in Mengen von 0 bis 5 Gew.%, bezogen auf die Monomerenmischung B, sowie in Mengen von 0,1 bis 15 Gew.% bei der Herstellung von Heißsiegel- und Dichtungsmassen.

Schließlich können im Monomerengemisch B als Monomere (h) 0 bis 10 Gew.% des Monomerengemischs B an ungesättigten, ein tertiäres Stickstoffatom tragende Monomere wie N,N-Dimethyl- und N,N-Diethyl-aminoethyl-(meth)acrylamid und -(meth)acrylat, Dimethyl- und Diethylaminoethylvinylether, N-Vinylimidazol, N-Vinylimidazolin, Vinylpridine sowie N-substituierte Amide, wie Mono- und Dialkyl(meth)acrylamid, N-Vinylformamid, N-Vinylpyrrolidon und N-Vinylcaprolactam copolymerisiert werden. Derartige Comonomere (g) sind in Mengen von 0 bis 2 Gew.% des Monomerengemischs B für Heißsiegelmassen, in Mengen von 0,1 bis 1 Gew.%, bezogen auf das Monomerengemisch B, für Dichtungsmassen von 0 bis 0,5 Gew.%, bezogen auf das Monomerengemisch B für Schmelzkleber und in Mengen von 0 bis 0,5, bezogen auf das Monomerengemisch B, für Schmelzhaftkleber von besonderem Interesse.

Bei der Herstellung von Schmelzklebern und insbesondere bei Schmelzhaftklebern ist es von besonde-

4

rem Vorteil, wenn das Monomerengemisch B derart gewählt wird, daß ein daraus allein hergestelltes Polymerisat mit dem gewählten Copolymerisat A unverträglich ist, was gegebenenfalls durch Vorversuche ermittelt werden kann, d.h. also, daß hierfür solche Monomerengemische B besonders vorgezogen werden, die, wenn man sie für sich polymerisiert Polymerisat ergeben, die in den gewählten Copolymerisaten A unlöslich bzw. im wesentlichen unlöslich sind. Zur Bestimmung der Unverträglichkeit kann z.B. eine 45 %ige Lösung des Polymerisats A in z.B. Toluol mit der gewünschten Menge eines aus der Monomerenmischung B allein hergestellten Polymerisats gründlich in der Wärme vermischt und in einer Glasplatte in einer Dicke von etwa 0,5 mm ausgebreitet werden. Man läßt dann an der Luft 2 Stunden bei 23°C und anschließend 3 Stunden bei 180°C trocknen und untersucht die Beschichtung nach dem Abkühlen auf Raumtemperatur visuell auf Klarheit. Wird ein trüber Film erhalten, sind Copolymerisat A und das allein aus dem Monomerengemisch B erhaltene Polymerisat unverträglich.

Bei einer besonderen Ausführungsform, die insbesondere für die Herstellung von Schmelz(haft)-klebemassen von Interesse ist, können die Polymerisate A bei der Polymerisation mit den Monomeren B in ganz oder teilneutralisierter Form eingesetzt werden. Eine derartige Neutralisation kann insbesondere mit basischen Alkalisalzen und Ammoniak durchgeführt werden. Beispiele hierfür sind vor allem Natriumhydroxid, Kaliumhyroxid und Lithiumhydroxid sowie die Alkoholate dieser Alkalimetalle, Alkalicarbonate wie Natriumcarbonat und Kaliumcarbonat sowie Alkalihydrogencarbonate wie Natriumhydrogencarbonat und Kaliumhydrogencarbonat. Für eine Teilneutralisation sind ferner auch gegebenenfalls basische Alkalimetallverbindungen und Amine geeignet. Die Neutralisation kann in geeigneten Lösungsmitten, z.B. in Keton/Alkoholgemischen, wie Aceton/Ethanol oder auch in der Schmelze durchgeführt werden. Anstelle von Ammoniak können z.B. Ethanolamin, Triethanolamin sowie Mono- und/oder Di- und/oder Trialkylamine mit 1 bis 18 C-Atomen im Alkylrest, wie Diethylamin, Isopropylamin, Di-2-ethylhexylamin, N,N-Dimethylethylamin, gegebenenfalls zusammen mit den basischen Alkaliverbindungen und gegebenenfalls Erdalkaliverbindungen eingesetzt werden.

Bei der Herstellung der erfindungsgemäßen Heißsiegel-, Dichtungs- und Schmelzklebemassen (einschließlich der Schmelzhaftklebemassen) werden die olefinisch ungesättigten Polymerisate A in Substanz oder in Lösung in Gegenwart von Polymerisationsinitiatoren und gegebenenfalls zusätzlich von Reglern bei Temperaturen von 80 bis 200°C pfropf(co)polymerisiert. Als Polymerisationsinitiatoren eignen sich vor allem Peroxide wie Di-tert-butylperoxid, Cumolhydroperoxid, tert.-Butylhydroperoxid, tert.-Butylperoctoat, tert.-Butylpervivalat, Isopropylperoxodicarbonat, Diacetylperoxid, tert.-Butylperacetat, Methylethylketonperoxid oder Azoisobuttersäuredinitril, gegebenenfalls im Gemisch miteinander. Sie werden in Mengen von 0,1 bis 5, vorzugsweise von 0,1 bis 3, insbesondere von 0,1 bis 2 Gew.%, bezogen auf die Menge an Copolymerisat A und Monomerenmischung B eingesetzt. Dabei kann es in manchen Fällen von Vorteil sein, solche Gemische von Polymerisationsinitiatoren einzusetzen, die eine unterschiedliche Halbwertszeit aufweisen. Die Polymerisation kann ansatzweise oder durch allmähliche Zugabe der Ausgangsstoffe, insbesondere der Monomerenmischung B erfolgen. Vorzugsweise polymerisiert man bei Temperaturen von 80 bis 120°C, wobei drucklos gearbeitet oder bei Drucken von 1 bis 100 bar, insbesondere bei Drucken von 1 bis 30 gearbeitet werden kann.

Besonders günstige Ergebnisse bei der Herstellung der Heißsiegel-, Dichtungs- und Schmelz(haft)-klebemassen erhält man, wenn man die Copolymerisation der olefinisch ungesättigten Polymerisate A mit den Monomeren B ansatzweise (oder unter Zufahren von Monomeren B) in Gegenwart von Lösungsmitteln durchführt. Geeignete Lösungsmittel hierfür sind z.B. aromatische Kohlenwasserstoffe wie Toluol, ortho-, meta- und para-Xylol, Ketone, wie Aceton, Diethylketon und Methylethylketon, Alkohole, wie Methanol, Ethanol, Isopropanol und deren Gemische, gegebenenfalls mit gesättigten Kohlenwasserstoffen wie Cyclohexan oder Benzinfraktionen. Da einige der genannten Lösungsmittel, beispielsweise aromatische Kohlenwasserstoffe wie Isopropylbenzol und Alkohole, kettenabbrechend wirken, kann sich durch geeignete Auswahl eines Lösungsmittelgemisches das Molekulargewicht bzw. die Viskosität der Produkte beeinflussen lassen. Als Regler können zudem in manchen Fällen z.B. Mercaptoverbindungen, wie Mercaptoethanol, Mercaptopropionsäure und 3-Mercapto-1,2-propandiol eingesetzt werden. Soweit bei der Herstellung der erfindungsgemäßen Heißsiegel-, Dichtungs- und Schmelz(haft)klebemassen Lösungsmittel mitverwendet wurden, werden diese nach Beendigung der Polymerisation durch Destillation bei erhöhter Temperatur, beispielsweise bei Temperaturen bis etwa 200°C, gegebenenfalls unter vermindertem Druck abgetrennt.

Die bei diesem neuen Verfahren erhaltenen Massen weisen im allgemeinen K-Werte, bestimmt in 1 %iger Lösung in Tetrahydrofuran bei 25°C (nach DIN 53 726) von 10 bis 100, vorzugsweise von 40 bis 85, insbesondere von 50 bis 70 auf. Sie weisen niedrige Schmelzviskositäten auf und können deshalb in einfacher Weise bei Temperaturen um 180°C und gegebenenfalls niedriger verarbeitet werden. Außerdem zeichnen sich insbesondere die erfindungsgemäßen Schmelz(haft)kleber nicht nur durch eine sehr gute Klebkraft und Schmelzviskosität, sondern auch durch eine hohe Scherfestigkeit bei 23°C und insbeson-de-

re 50 °C aus.

Die erfindungsgemäßen Massen können in üblicher Weise modifiziert und konfektioniert werden, wobei gegebenenfalls die üblichen, in der klebstoffherstellenden Industrie verwendeten klebrig-machenden Harze wie (hydrierte) Kohlenwasserstoffharze, gegebenenfalls modifizierte Kollophoniumharze, Terpenphenolharze, Ketonharze, Aldehydharze, Kumaron-inden-harze, Dicyclopentadienharze, Weichmacher auf Basis von Mono-, Di- oder Polyesterverbindungen, polychlorierten Kohlenwasserstoffen oder Paraffinölen, Farbstoffe, Pigmente, Füllstoffe wie Schwerspat, Kreide, Talkum, Quarzmehl und/oder Titandioxid sowie Stabilisatoren wie tert.-Butylhydrochinon sowie gegebenenfalls auch andere Stoffe mit klebenden Eigenschaften, z.B. Natur-und/oder Synthesekautschuk, Polyvinylether, Polybutadienöle zugegeben werden können. Die erfindungsgemäßen Massen können in an sich üblicher Weise insbesondere durch Extrudieren sowie auch durch Streichen, Verdüsen, Spritzen, Walzen, Rakeln oder Gießen bei erhöhten Temperaturen, insbesondere bei Temperaturen von 120 bis 200, vor allem von 140 bis 180 °C auf Papier, Pappe, Zellstoff, Holz, Metalle oder Folien, beispielsweise aus gegebenenfalls weichgemachtem Polyvinylchlorid, Polyethylen, Polypropylen, Polyamid oder Polyethylenglykolterephthalat sowie aus Metallen, wie Aluminium, aufgetragen werden. Nach dem Auftrag kann ein schnelles Abkühlen, beispielsweise durch Kühlwalzen erfolgen, gegebenenfalls auch über eine Kühlstrecke ein allmähliches Abkühlen und/oder eine Temperung durchgeführt werden.

Anwendungstechnische Prüfung

Die nach den Beispielen und Vergleichsversuchen hergestellten Copolymerisate werden einer Vergleichsprüfung unterworfen und dabei die
    a) Schmelzviskosität von 180 °C
    b) Scherfestigkeit bei 23 °C und 50 °C und
    c) Schälfestigkeit gemessen.

Die Klebeeigenschaften von flächigen Substraten, die eine Haftklebebeschichtung aufweisen, kann durch Messung der Scherfestigkeit als Maß für die Kohäsion und der Schälfestigkeit als zusammenfassendes Maß für Kohäsion und Oberflächenklebigkeit erfaßt werden.

Für die Prüfung werden Folien aus Polyethylenglykolterephthalat mit den Massen, 50 Gew.% gelöst in Aceton derart beschichtet, daß sich eine Trockenschichtdicke von 25µm ergibt;
Das Lösungsmittel wird 10 Minuten bei 70 °C und 1 bar abgedampft. Die getrockneten, beschichteten Folien wrden in 2 cm breite Streifen geschnitten und diese Streifen auf eine verchromte Messingplatte aufgebracht. Die Platte wird dann 24 Stunden bei 23 °C und 65 % relativer Luftfeuchtigkeit gelagert.

Zur Messung der Schälfestigkeit werden die Prüfstreifen parallel zur Klebeschicht mit einer Geschwindigkeit von 300 mm/min rückwärts abgezogen. Die hierfür erforderliche Kraft wird gemessen und in N/2 cm angegeben.

Bei der Messung der Scherfestigkeit wird eine verklebte Fläche von 20 × 45 mm zurechtgeschnitten, die Platte senkrecht eingespannt und der überhängende Teil des Klebestreifens mit einem Gewicht von 1 kg belastet. Es wird die Zeit gemessen, bis sich die Verklebung löst. Die Messung wird bei 23 °C und 50 °C durchgeführt. Die in den Tabellen angegebenen Werte sind Mittel aus jeweils 3 Messungen.

Die Schmelzviskosität wird mit einem Rotationsviskosimeter mit einem Platte-Kegel-System bei 180 °C gemessen.

Die in den folgenden Beispielen angegebenen Teile und Prozente beziehen sich auf das Gewicht. Die Bestimmung der K-Werte erfolgte nach DIN 53 726 in 1 %iger Lösung in Tetrahydrofuran bei 25 °C.

Herstellung der Pfropf(co)polymerisate

Beispiel 1

Ein Gemisch aus 2,5 Gew.% Acrylsäure, 2,5 Gew.% Vinylacetat, 60 Gew.% n-Butylacrylat, 22,5 Gew.% 2-Ethylhexylacrylat und 12,5 Gew.% eines olefinisch ungesättigten Polymeren aus 70 Gew.% Styrol, 6 Gew.% α-Methylstyrol und 24 Gew.% Methacrylsäure mit einem mittleren Molekulargewicht von 5200 (dampfdruckosmometrisch gemessen in Aceton) und einer Hydrieriodzahl von 4,9 (nach DIN 53 241). Wird mit 1,25 Gew.% (bezogen auf die Summe der Gewichte der genannten Reaktanten) tert.-Butyl-per-2-ethylhexanoat in 60 Gew.%, bezogen auf Polymeres und Monomeres eines Gemischs aus 33 Teilen Aceton, 66 Teilen Toluol und 1 Teil iso-Propanol bei 100 bis 110° C gelöst und 5 Stunden polymerisiert.

Das Polymerisat hat den K-Wert 65. Es eignet sich als Schmelzhaftkleber.

Beispiel 2

Ein Gemisch aus 58,5 Gew.% n-Butylacrylat, 4 Gew.% Laurylacrylat, 18 Gew.% 2-Ethylhexylacrylat, 4,5 Gew.% n-Butyl(meth)acrylat, 2,5 Gew.% Methacrylsäure und 2,5 Gew.% 2-Hydroxipropylacrylat wird mit 10 Gew.% eines olefinisch ungesättigten Polymeren aus 40 Gew.% para-tert.-Butylstyrol, 10 Gew.% α-Methylstyrol 20 Gew.% Styrol und 30 Gew.% Methacrylsäure eines Molekulargewichts von 10500 und einer Hydrieriodzahl von 1,2 mit 1,5 Gew.% (bezogen auf die Summe der Gewichte der genannten Stoffe) Di-tert.-butylperoxid bei 90 bis 100° C in 55 Gew.%, bezogen auf das Polymere und die Monomeren eines Gemischs aus 66 Teilen Toluol, 34 Teilen Aceton 6 Stunden polymerisiert.

Das erhaltene Polymerisat hat den K-Wert 67,2. Es eignet sich als Schmelzhaftkleber.

Vergleichsversuch A

Ein Gemisch der unter Beispiel 1 angegebenen Zusammensetzung und Monomerkombination wird ohne das olefinisch ungesättigte Polymere, aber mit 12,5 Gew.% einer Monomermischung aus 70 Gew.% Styrol, 6 Gew.% α-Methylstyrol und 24 Gew.% Methacrylsäure, wie in Beispiel 1 angegeben polymerisiert.

Das Polymerisat hat den K-Wert 66.

Vergleichsversuch B

Ein Gemisch der unter Beispiel 2 angegebenen Zusammensetzung und Monomerkombination wird ohne das olefinisch ungesättigte Polymere, aber mit 10 Gew.% einer Monomermischung aus 40 Gew.% para-tert-Butylstyrol, 10 Gew.% α-Methylstyrol, 20 Gew.% Styrol und 30 Gew.% Methacrylsäure in der unter Beispiel 2 angegebenen Weise polymerisiert.

Das Polymerisat hat den K-Wert 71.

Anwendungstechnische Prüfung der Schmelzhaftkleber

Tabelle 1

| | Beispiele | | Vergleichsversuche | |
|---|---|---|---|---|
| | 1 | 2 | A | B |
| Viskosität bei 180° C | 95 Pas | 80 Pas | 100 Pas | 95 Pas |
| Scherfestigkeit bei 25° C | >100 h | >100 h | 10 h | 5 h |
| Scherfestigkeit bei 50° C | > 20 h | > 7 h | 0,5 h | 0,1 h |
| Schälfestigkeit in N/2 cm | 7,5 | 7,0 | 7,5 | 8,0 |

Beispiel 3

Ein Gemisch aus 55 Gew.% n-Butylacrylat, 28,5 Gew.% 2-Ethylhexylacrylat und 12,5 Gew.% eines olefinisch ungesättigten Polymeren aus 76 Gew.% Styrol und 24 Gew.% Methacrylsäure mit einem mittleren Molekulargewicht von 5200 (dampfdruckosmometrisch in Aceton), einer Hydrieriodzahl von 4,9 (nach DIN 53 241), wird mit 1,25 Gew.% (bezogen auf die Summe der Gewichte der genannten Stoffe) tert.-Butylper-2-ethylhexanoat in Lösung in 60 Gew.%, bezogen auf das Polymere und die Monomeren eines Gemischs aus 100 Teilen aus 30 Teilen Aceton, 70 Teilen Toluol bei 100° C bis 110° C polymerisiert.

Das Polymerisat hat den K-Wert von 50. Es eignet sich als Schmelzhaftkleber.

## Beispiel 4

Ein Gemisch aus 44 Gew.% n-Butylacrylat, 46 Gew.% 2-Ethylhexylacrylat wird mit 10 Gew.% eines olefinisch ungesättigten Polymeren aus 40 Gew.% para-tert-Butylstyrol, 10 Gew.% α-Methylstyrol, 20 Gew.% Styrol und 30 Gew.% Methacrylsäure mit einem mittleren Molekulargewicht von 10500, einer Hydrieriodzahl von 1,2 und einer Erweichungstemperatur von 162° C mit 1,5 Gew.% (bezogen auf die Summe der Gewichte der genannten Stoffe) Di-tert-Butylperoctoat bei 95° C bis 125° C in Lösung in 50 Gew.%, bezogen auf das Polymere und die Monomere eines Gemischs aus 75 Teilen Toluol, 24 Teilen Aceton und 1 Teil iso-Propanol polymerisiert.

Das Polymerisat hat den K-Wert 60,2. Es eignet sich als Schmelzhaftkleber.

## Vergleichsversuch C

Ein Gemisch der unter Beispiel 3 angegebenen Zusammensetzung und Monomerkombination wird ohne das olefinisch ungesättigte Polymere, aber mit 12,5 Gew.% einer Monomermischung aus 76 Gew.% Styrol und 24 Gew.% Methacrylsäure, wie in Beispiel 3 angegeben polymerisiert. Das erhaltene Polymerisat hat den K-Wert 64.

## Vergleichsversuch D

Ein Gemisch der unter Beispiel 4 angegebenen Zusammensetzung und Monomerkombination wird ohne das olefinisch ungesättigte Polymere, aber mit 10 Gew.% einer Monomermischung aus 40 Gew.% para-tert.-Butylstyrol, 10 Gew.% α-Methylstyrol, 20 Gew.% Styrol und 30 Gew.% Methacrylsäure in der unter Beispiel 4 angegebenen Weise polymerisiert. Das erhaltene Polymerisat hat den K-Wert 69.

Tabelle 2

| Anwendungstechnische Prüfung der Schmelzhaftkleber | | | | |
|---|---|---|---|---|
| | Beispiele | | Vergleichsversuche | |
| | 3 | 4 | C | D |
| Viskosität bei 180° C | 55 Pas | 60 Pas | 60 Pas | 55 Pas |
| Scherfestigkeit bei 23° C | >300 h | >300 h | 20 h | 15 h |
| Scherfestigkeit bei 50° C | > 30 h | > 30 h | 2,5 h | 3,0 h |
| Schälfestigkeit in N/2 cm | 9,0 | 10,5 | 6,5 | 8,7 |

## Ansprüche

1. Heißsiegel-, Dichtungs- und Schmelzklebemassen, insbesondere Schmelzhaftklebemassen, hergestellt durch Lösungs- oder Substanzpfropfcopolymerisation von

A 5 bis 30 Gew.%, bezogen auf die Massen, an einem olefinisch ungesättigten Polymerisat eines Molekulargewichts (Zahlenmittel) von 500 bis 50.000 und einer Hydrieriodzahl (nach DIN 53 241) von 0,5 bis 51 aus

(a) 40 bis 100 % seines Gewichts monovinylaromatischen Verbindungen,

(b) 0 bis 51 % seines Gewichts 3 bis 5 C-Atome enthaltenden Mono- oder Dicarbonsäuren und/oder deren Anhydride

(c) 0 bis 20 % seines Gewichts anderen monoolefinisch ungesättigten Monomeren,

mit der Maßgabe, daß die Summe der Gewichtsprozente (a) bis (c) immer 100 beträgt, mit

B 95 bis 70 Gew.%, bezogen auf die Massen, eines Gemisches aus

(d) 100 bis 50 % seines Gewichts an (Meth)acrylsäureestern, 1 bis 12 C-Atomen enthaltender Alkanole,

(e) 0 bis 50 % seines Gewichts an Vinylestern, 2 bis 18 C-Atome enthaltender Alkanolmonocarbonsäuren,

(f) 0 bis 10 % seines Gewichts an Mono-(meth)acrylsäureestern, 2 bis 8 C-Atomen enthaltender Alkandiole oder des Glycerins,

(g) 0 bis 15 % seines Gewichts an 3 bis 5 C-Atome enthaltenden monoolefinisch ungesättigten Mono- und/oder Dicarbonsäuren und

(h) 0 bis 10 % seines Gewichts an monoolefinisch ungesättigten, ein tertiäres Stickstoffatom enthaltenden Monomeren,

bei Temperaturen von 80 bis 200° C und gegebenenfalls Abdampfen der Lösungsmittel.

2. Heißsiegel-, Dichtungs- und Schmelzklebemassen, insbesondere Schmelzhaftklebemassen, hergestellt nach Anspruch 1, dadurch gekennzeichnet, daß

A 7,5 bis 20 Gew.%, bezogen auf die Massen, eines olefinisch ungesättigten Polymerisates eines Molekulargewichts von 1000 bis 25.000 einer Hydrieriodzahl von 1,3 bis 25 und einer Erweichungstemperatur von 80 bis 200° C aus

(a) 70 bis 90 % seines Gewichts monovinylaromatischen Verbindungen und

(b) 10 bis 30 % seines Gewichts an 3 bis 5 C-Atome enthaltenden Mono- und/oder Dicarbonsäuren und deren Anhydride mit

B 94,5 bis 80 Gew.%, bezogen auf die Massen, eines Gemisches aus

(d) 99,8 bis 80 % seines Gewichts, 1 bis 8 C-Atome im Alkanolrest enthaltenden (Meth)acrylsäureestern,

(e) 0 bis 19,8 % seines Gewichts Vinylacetat und/oder Vinylpropionat,

(f) 0 bis 10 % seines Gewichts an Mono(meth)acrylsäureestern, 2 bis 8 C-Atome enthaltender Alkanole oder des Glycerins und

(g) 0,1 bis 10 % seines Gewichts an 3 bis 5 C-Atome enthaltenden monoolefinisch ungesättigten Mono- und/oder Dicarbonsäuren

copolymerisiert sind, wobei die Menge an Monomeren (f) und (g) zusammen 2 bis 10 % des Gewichts der Monomerenmischung beträgt.

3. Heißsiegel-, Dichtungs- und Schmelzklebemassen, insbesondere Schmelzhaftklebemassen, hergestellt nach Anspruch 2, dadurch gekennzeichnet, daß das olefinisch ungesättigte Copolymerisat A mit Ammoniak oder Alkalihydroxiden, Alkalicarbonaten oder Alkalihydrogencarbonaten vor, während oder nach der Copolymerisation ganz oder teilweise neutralisiert wird.